(19) Europäisches Patentamt
European Patent Office
Office européen des brevets

(11) Numéro de publication: **0 023 173**
**B1**

(12) **FASCICULE DE BREVET EUROPEEN**

(45) Date de publication du fascicule du brevet: **14.12.83**

(51) Int. Cl.³: **C 07 F 9/40**, C 22 B 60/02

(21) Numéro de dépôt: **80401011.4**

(22) Date de dépôt: **03.07.80**

(54) **Nouveaux esters diphosphoniques et triphosphoniques, leurs préparation et applications.**

(30) Priorité: **09.07.79 FR 7917736**
**09.07.79 FR 7917737**

(43) Date de publication de la demande:
**28.01.81 Bulletin 81/4**

(45) Mention de la délivrance du brevet:
**14.12.83 Bulletin 83/50**

(84) Etats contractants désignés:
**AT BE CH DE GB IT LI LU NL SE**

(56) Documents cités:
**US - A - 2 599 807**
**US - A - 2 609 390**
**US - A - 3 993 728**
**CHEMICAL ABSTRACTS, vol. 83, 1975, page 405, réf. 153311r. Columbus, Ohio, USA P.J. ZURNEDDEN: "Effect of a second organic solvent on the extraction of trivalent europium by organophosphorus acids into benzene"**
**DERWENT SOVIET INVENTIONS ILLUSTRATED, Section Ch: Chemicals, Week X14, (1975), Section A + E, pages 2-3**

**Le dossier contient des informations techniques présentées postérieurement au dépôt de la demande et ne figurant pas dans le présent fascicule.**

(73) Titulaire: **SOCIETE NATIONALE ELF AQUITAINE (PRODUCTION)**
**Tour Aquitaine**
**F-92400 Courbevoie (FR)**

(72) Inventeur: **Sturtz, Georges**
**22 rue Léon Blum**
**F-29200 Brest (FR)**
Inventeur: **Pensec, Thierry**
**7 rue du 8 Mai**
**F-29114 Bannalec (FR)**
Inventeur: **Gautier, Jean-Claude**
**5 Avenue Jean-Jaurès**
**F-64140 Billere (FR)**

(74) Mandataire: **Kohn, Armand**
**5 Avenue Foch**
**F-92380 Garches (FR)**

(56) Documents cités
**DERWENT SOVIET INVENTIONS ILLUSTRATED, Section Ch: Chemicals, Week V42 (1974), Section E, page 1**

**G.M. KOSOLAPOFF et L. MAIER: "Organic Phosphorous Compounds", vol. 7, 1976, John Wiley & Sons Ed. New York, US pages 258-273**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 023 173 B1**

Nouveaux esters diphosphoniques et triphosphoniques, leurs préparation et applications

L'invention concerne un nouveau groupe de composés di- et tri-phosphoniques, notamment des diesters de tels acides, dans lesquels les deux atomes de phosphore sont reliés par un groupement hydrocarboné. L'invention comprend également un procédé de production de ces nouveaux composés et leur application.

Différents phosphonates et diphosphonates sont connus dans l'industrie où ils trouvent des applications variées. Ainsi, connaiton des agents mouillants, émulsifiants et adoucissants à base de phosphonates dont le groupe organique, directement lié au phosphore, est cétalique, acétalique ou di-hydroxylé; de tels produits, également utiles comme retardateurs de la combustion pour cellulose et différents polymères, sont décrits dans le brevet français n° 1 459 049. Des phosphonates anti-oxydants font l'objet de la publication du brevet français n° 2 048 493, tandis que des diphosphonates sont proposés comme anti-oxydants et stabilisants de polymères, selon la publication française 2 268 800. Des phosphonates et diphosphonates polymères feraient partie de diverses compositions de résines d'après 1'USP 3 220 989 et la publication française 2 184 706. D'autre/part, toute une gamme de pesticides à base de phosphonates au soufre sont dans le commerce, notamment sous la marque "Demephon". Une autre application intéressante de certains diphosphonates est la complexation de métaux lourds: cet emploi comme chélatants est/indiqué, par exemple, dans les USP 2 599 807 et 2 609 390. Il est à noter que dans les dérivés des acides diphosphoniques, employés jusqu'à présent, la liaison entre les deux atomes de phosphore a lieu par l'intermédiaire de l'oxygène ou/et du soufre, ce qui serait la cause d'un certain manque de stabilité des composés en question. Vu l'utilité, si générale, de ces derniers, on avait intérêt à rechercher des diphosphonates plus stables: c'était là le but des travaux qui ont abouti à la présente invention.

Les esters phosphoniques acides, dont les atomes de P sont reliés par un groupe hydrocarboné, ont l'avantage d'une meilleure stabilité; cependant, ceux de l'art antérieur, (CHEM. ABSTR. vol. 83, 1975 p. 405 réf. 153312; G. M. KOSOLAPOFF et L.MAIER "Organic Phosphorous Compounds" vol. 7, 1976, pages 258—273; USP 3 993 728) ne sont pas bien efficaces pour l'extraction de l'U et de métaux lourds. De façon inattendue, on a trouvé que ce défaut est dû à ce que la chaîne hydrocarbonée, reliant les atomes de phosphore, est trop courte ou trop longue dans ces produits connus. La présente invention résulte de la constatation surprenante que les esters acides phosphoniques peuvent être très efficaces comme agents d'extraction de métaux, si la chaîne hydrocarbonée, reliant les atomes de P, comporte au moins 3, mais pas plus de 6 atomes de carbone.

Les esters phosphoniques suivant l'invention, dans lesquels deux atomes de phosphore sont reliés par un groupe organique, au moyen d'une liaison directe phosphore-carbone, et qui répondent à la formule

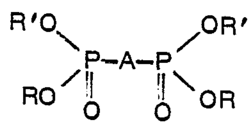

(I)

dans laquelle A est un groupe aliphatique dont un des atomes de carbone peut être lié à l'atome de phosphore d'un groupement

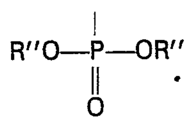

(II)

les symboles R et R'', semblables ou différents, désignant des alkyles en $C_1$ à $C_{20}$, sont caractérisés en ce que les R' sont des atomes d'hydrogene ou de métal alcalin, ou bien des cations d'ammonium quaternaire, le groupe aliphatique A ayant 3 à 6 atomes de carbone. Ce groupe est, par exemple, un alkylényle comme

$—CH=CH—CH_2—$, 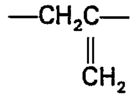 ou $—CH_2—CH=CH—CH_2—$.

Les composés diphosphoniques préférés sont les acides diesters où R'=H; ils présentent des propriétés physiques, notamment des points de fusion et d'ébullition variables, suivant la nature des groupes A et R; il est donc possible de trouver toujours, dans cette série, le composé approprié à une application donnée, en choisissant, en conséquence, la nature de ces groupes A et R.

Les composés triphosphoniques, suivant l'invention, dérivés de la formule I, dans laquelle A porte le groupement II, peuvent être représentés par la formule

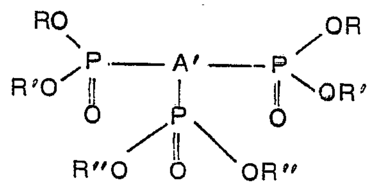

III

où A′ désigne un reste trivalent, du groupe A défini plus haut; R″ est un alkyle en $C_1$ à $C_{20}$.

Ainsi, l'ester triphosphonique, suivant l'invention, peut-il être un tétraester-di-acide quand R′ est H, et un tétraester-di-sel, si R′ est un cation.

Suivant la nature des groupes A′, R, R′, R″, ces produits peuvent être liquides ou solides, ce qui permet le choix du triphosphonate approprié à chaque application voulue. Ainsi, par exemple, avec A′ étant

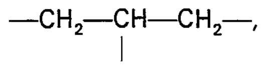

R méthyle, R′ cation Na et R″ n-butyle, le produit est liquide, tandis qu'il est solide si R″ est n-octyle.

Suivant une caractéristique particulière, chacun des atomes de phosphore, du produit selon l'invention, est lié à un autre atome de carbone du groupe hydrocarboné A′.

L'invention comprend également un mode de préparation des nouveaux produits décrits plus haut. Pour la formule I (R′=H), ce procédé consiste à transformer le diphosphonate de tétraméthyle correspondant en remplaçant, sur chacun des atomes de phosphore de la molécule, un groupe $—OCH_3$ par le groupe —OR voulu, tandis que le second $—OCH_3$ est hydrolysé en —OH. Afin de réaliser cette transformation, le nouveau procédé est effectué en trois étapes successives:

1°—traitement du composé de départ (formule IV) par une base faible, de préférence amine, de façon à former un di-sel diester méthylique;

2° —réaction d'une halogénure de radical hydrocarboné R avec le di-sel pour substituer R au cation de la base utilisée;

3°—hydrolyse des deux $—OCH_3$ restants.

Ces opérations peuvent être illustrées par les équations suivantes, (1) à (3), pour un cas de mode opératoire particulier.

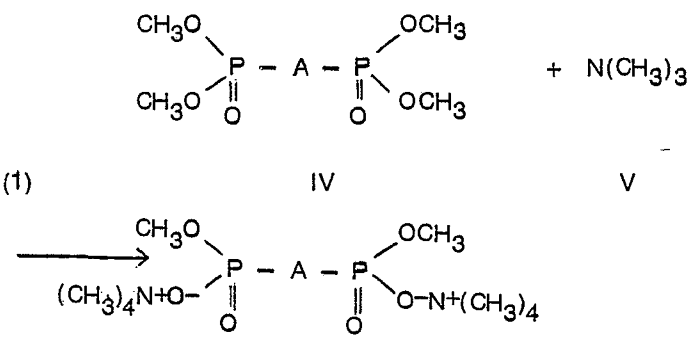


(1) IV V

VI

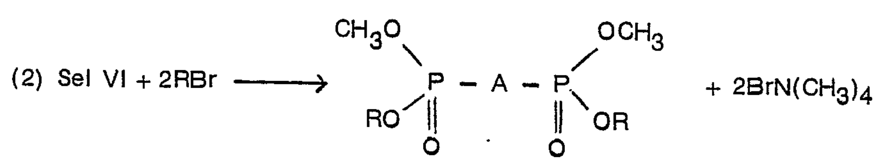


VII

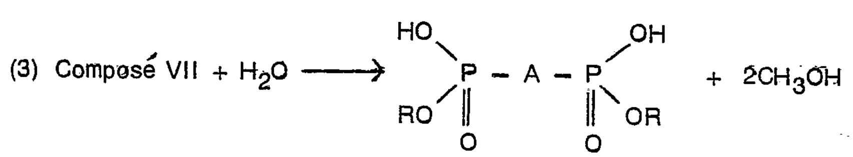


I

La réaction (1) est effectuée au sein d'un solvant anhydre, par exemple d'un alcool, à une température d'environ 50 à 100°C, sous agitation pendant plusieurs heures. La base utilisée (V) doit être du type faible, c' est-à-dire à constante de dissociation ionique ne dépassant pas $10^{-3}$ et, de préférence, comprise entre $10^{-4}$ et $10^{-6}$. Des amines conviennent particulièrement bien à cet effet et conduisent à des di-sels d'ammonium quaternaire (VI). Ainsi, peut-on employer les méthyl-, éthyl-, propyl-, isopropyl-, butyl-, isobutyl-, tert-butyl-, pentyl-, hexyl-amines, les di-et triamines correspondantes, benzyl-amines, éthanolamines, etc. La triméthyl-amine (V), qui figure dans la réaction (1) écrite plus haut, et dont la constante de dissociation est de $5{,}27 \times 10^{-5}$, à 25°C, convient particulièrement bien tant au point de vue chimique qu'économique.

Il est à noter que les sels d'ammonium quaternaires, représentés par la formule (VI), sont des produits chimiques nouveaux, qui servent d'intermédiaires dans le procédé suivant l'invention: ils font donc partie de celle-ci. Ils ont pu être obtenus avec de bons rendements, notamment:

85% lorsque A est $-CH_3CH-$
$\quad\quad\quad\quad\quad\quad\quad\quad |$
$\quad\quad\quad\quad\quad\quad\quad CH_3$

90% lorsque A est $-CH_2-C-$
$\quad\quad\quad\quad\quad\quad\quad\quad\quad \|$
$\quad\quad\quad\quad\quad\quad\quad\quad CH_2$

70% lorsque A est $-CH_2CH{=}CH-$

On voit que le nouveau procédé convient bien tant à la préparation de composés avec A non saturé qu'à celle des produits dont ce groupe A est saturé.

Dans la réaction (2), le sel de tétraméthyl-ammonium (VI), recueilli à la suite de l'étape (1), est remis dans un solvant, bouillant de préférence entre 50° et 100°C; ce solvant doit bien entendu être inerte chimiquement vis-à-vis du sel traité. On utilise des solvants aprotiques, polaires, par exemple diméthyl-formamide, diméthylsulfoxyde, hexaméthylphosphotriamide, acétonitrile, etc. A cette solution, on ajoute un léger excès d'halogénure, surtout chlorure ou bromure de R, soit RBr dans l'exemple de la réaction (2) ci-dessus. L'acétonitrile qui bout à 81,6°C convient particulièrement bien. On chauffe à reflux pendant plusieurs heures, en général 4 à 10, jusqu'à ce que l'halogénure d'ammonium quaternaire ait précipité. A la fin, le diester mixte (VII) est séparé de sa solution dans le solvant utilisé, pour être hydrolysé dans l'étape (3).

Bien que la réaction (3) soit essentiellement une hydrolyse, elle est de préférence précédée par une réaction produisant un sel métallique, dans laquelle un cation, notamment alcalin ou alcalino-terreux, remplace chacun des $-CH_3$ présents dans la molécule (VII). Pour cela, ce composé (VII) est mis en solution dans un solvant approprié, qui peut en même temps dissoudre une quantité suffisante d'une iodure, par exemple iodure de Na ou K.

Le sel de sodium ou de potassium, ainsi formé, précipite, et il suffit alors de le laver à l'acide pour passer à l'acide diphosphonique (I) recherché. Des résultats particulièrement favorables sont obtenus avec une solution acétonique de NaI, que l'on porte à reflux pendant plusieurs heures avec le diester mixte (VII). Le précipité obtenu est lavé à l'acétone, puis traité à l'acide chlorhydrique pour transformer le dérivé sodique en l'acide (I).

En ce qui concerne la matière première de ce procédé, c'est-à-dire le diphosphonate tétraméthylique (IV), elle peut être synthétisée par une des méthodes connues en soi.

Les composés triphosphoniques du type III peuvent être obtenus, suivant l'invention, à partir des composés diphosphoniques dont les deux atomes de P sont reliés par un groupe A non saturé (I).

Cette réaction peut être illustrée par l'exemple suivant, où le pont entre les deux atomes de phosphore du produit de départ est constitué par le groupe allylique $-CH{=}CH-CH_2-$ qui comporte une insaturation éthylénique:

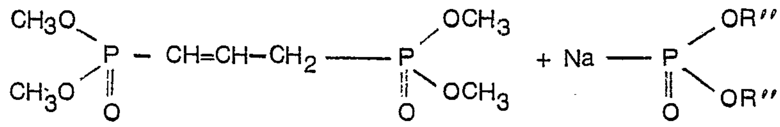

(IV) (VIII)

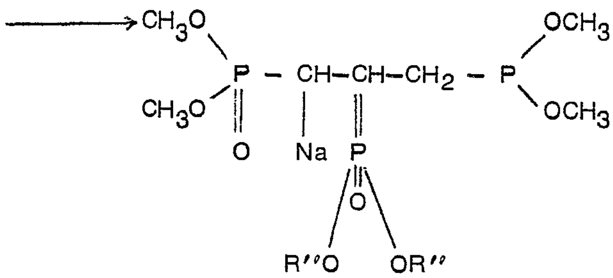

(IX)

Le dérivé IX formé, dont le site sodé peut s'écrire

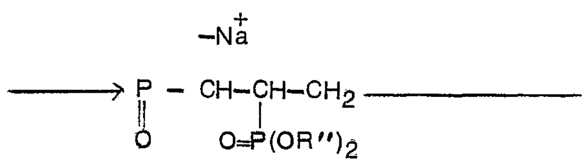

donne, après acidification, le triphosphonate recherché:

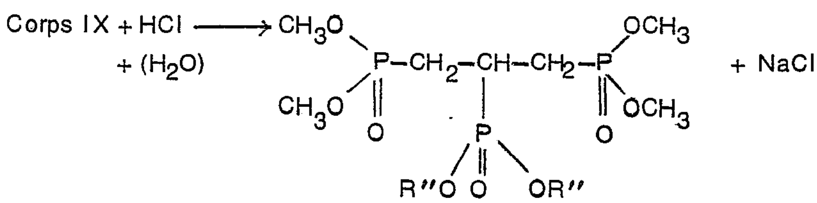


(X)

Bien entendu, le composé de départ I peut avoir à la place des $—CH_3$ d'autres radicaux ou des hydroxyles, et, au lieu du pont allylique, un autre groupe insaturé, réactif. Ainsi peut-on préparer des triphosphonates à partir des diphosphonates correspondants. Au point de vue pratique, il est à noter que le diphosphonate tétraméthylique est le plus accessible industriellement.

A partir du triphosphonate (X), on peut — conformément à l'invention — passer à un di-sel métallique correspondant par l'action d'un sel MY où M est un atome métallique, plus particulièrement alcalin, alcalino-terreux ou Zn, ou bien un cation ammoniacal, c'est-à-dire $NH_4$ ou amine, tandis que Y est l'anion, notamment halogène, sulfate, sulfite, acétate ou autre.

Cette réaction, qui a lieu au sein d'un solvant organique, dans lequel le sel MY est moins ionisé que dans l'eau, peut s'ecrire:

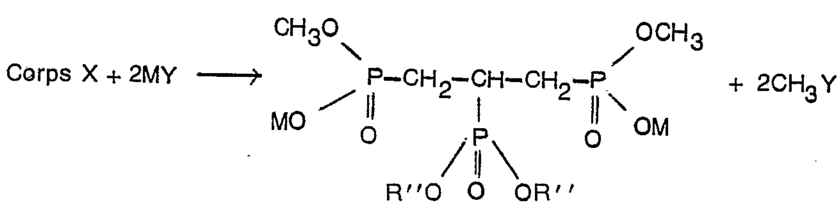


(XI)

Le cas où M est du sodium est pratiquement la plus courant. La réaction s'effectue le mieux entre 50° et 100°C, de préférence à reflux du solvant, pendant quelques heures.

Le di-sel XI obtenu est la substance de formule III avec cation métallique M à la place de R'. Pour passer au diacide correspondant, où les R' sont des H, il suffit d'hydrolyser le di-sel XI, ce qui peut être réalisé par traitement avec une solution aqueuse d'un acide, par exemple HCl ou $H_2SO_4$. Pour obtenir directement le diacide on peut effectuer une hydrolyse acide ménagée, qui n'attaque que le groupement méthoxy. Cette hydrolyse se fait par exemple au moyen de HCl, de $H_3PO_4$ ou de $H_2SO_4$ dilué, ou bien par l'action d'une amine tertiaire, notamment la triméthylamine.

Par une hydrolyse acide plus poussée, on obtient le tétra-acide, c'est-à-dire le produit dans lequel R et R' sont des atomes d'hydrogène.

Les exemples, non limitatifs, qui suivent, illustrent l'invention.

L'invention est illustrée par les exemples non limitatifs suivants.

## Exemple 1

Préparation de di-sel de tétraméthyl-ammonium (VI)

Dans un autoclave de 1 litre, on place 0,5 mole de diphosphonate tétraméthylique de formule (IV), dans lequel A est le groupe éthylénique

$$-CH_2C=CH_2.$$

On ajoute 1,3 mole de triméthylamine, soit un excès de 30%, et 400 ml de méthanol sec. La réaction s'effectue à 80°C, sous agitation, pendant 15 heures. Après refroidissement, on chasse le méthanol sous pression réduite et l'on recueille les cristaux qui se forment; ce produit est recristallisé dans l'acétone, que l'on sépare ensuite par filtration. Après séchage, (rendement 90%) le spectre RMN enregistré sur un appareil Jeol C 60 HL, avec du tétraméthylsilane comme référence interne, a conduit aux données suivantes.

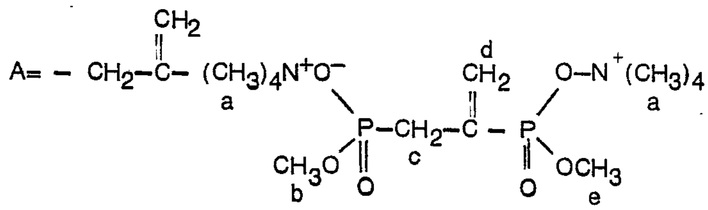

TF=258°C

δHa = 3,275 ppm singulet (24 H)
δHb = 3,55 ppm doublet (3 H) JPHb = 0,5 Hz
δHc = multiplet entre 2,2 et 2,85 ppm (2 H)
δHd = massif entre 5,6 et 6,5 ppm (2 H)
δHe = 3,65 ppm doublet (3H) JPHe = 10,5 Hz

## Exemple 2

Suivant la technique des exemples 1, on part du diphosphonate tétraméthylique dont le groupe A est $-CH_2-CH=CH-$. Le rendement s'élève à 70%.

Les données de la RMN sont:

A= $-CH_2-CH=CH-$

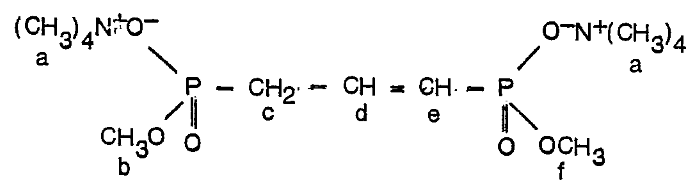

δHa = 3,225 ppm singulet (24 H)
δHb = 3,52 ppm doublet (3 H) JPHb = 10,5 Hz
δHc = massif entre 2,4 et 3 ppm (2 H)
δHd + He = massif entre 5,4 ppm et 6,5 ppm (2 H)
δHf = 3,55 doublet (3 H) JPHf = 10,5 Hz

## Exemple 3

Transformation du di-sel de tétra-méthyl-ammonium (VI) en diphosphonate mixte de formule VII. Le di-sel est celui de l'exemple 1 où A est

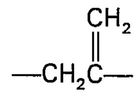

Dans un tricol de 500 ml, muni d'un agitateur magnétique et d'un réfrigérant ascendant, on place 0,1 mole du sel de tétraméthyl-ammonium avec 0,21 mole de bromure d'éthyl-2-hexyle,

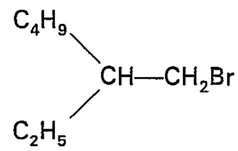

La réaction est conduite dans 250 ml d'acétonitrile à reflux, pendant 7 heures. Il se forme un précipité de bromure de tétraméthyl-ammonium que l'on sépare par filtration sous vide. Le solvant est chassé par évaporation sous pression réduite, de manière à éliminer également un léger excès de dérivé bromé.
Voici les indications du spectre RMN:

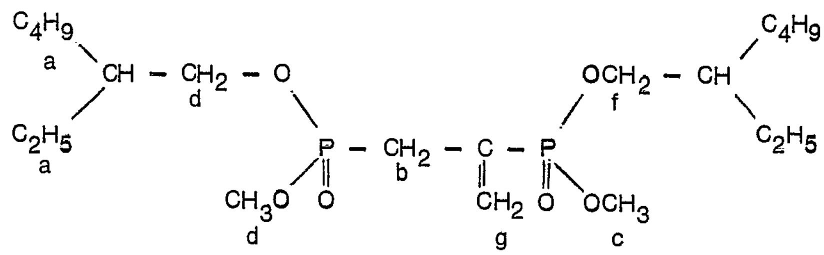

δHa = massif compris entre 0,7 et 1,5 ppm (30 H)
δHb = multiplet (6 raies) entre 2,1 et 2,95 ppm (2 H)
δHc = 3,675 ppm doublet (3 H) JPHc = 10,5 Hz
δHd = 3,7 ppm doublet (3 H) JPHd = 10,5 Hz
δHe + δHf = massif centré vers 3,85 ppm (4 H)
δHg = multiplet compris entre 5,3 et 6,6 ppm (2 H)

### Exemple 4

La transformation du di-sel de tétra-méthyl-ammonium, obtenu dans l'exemple 2, est effectuée de la même façon qu'à l'exemple 3 par l'action du bromure d'éthyl-2-hexyle.

### Exemple 5

Les opérations de l'exemple 3 sont répétées, le bromure d'éthyl-hexyle étant remplacé par du bromure n-octyle $C_8H_{17}Br$, ce qui conduit au diphosphonate mixte (VII), dont chacun des R est un groupe $—C_8H_{17}$.

### Exemple 6

On opère comme dans l'exemple 5, mais le bromure d'alkyle employé est celui de lauryle $C_{12}H_{25}Br$.

### Exemple 7

Les opérations de l'exemple 6 sont effectuées sur le diesel de tétra-méthyl-ammonium obtenu dans l'exemple 1.

### Exemple 8

Les opérations de l'exemple 6 portent sur le di-sel de tétra-méthyl-ammonium obtenu selon l'exemple 2.

### Exemple 9

Dans une série de préparations séparées, on a procédé à l'hydrolyse des diphosphonates mixtes de formule VII, obtenus dans les exemples 3 à 8.

Le mode opératoire comprend deux stades: d'abord précipitation d'un sel de sodium du diphosphonate, et ensuite passage à l'acide correspondant par traitement de ce sel à l'acide chlorhydrique. Dans un ballon de 1 litre, muni d'un réfrigérant ascendant et d'un agitateur magnétique, on place 0,1 mole de diphosphonate mixte VII et 0,22 mole de NaI dans 300 ml d'acétone sèche. On porte à reflux pendant 5 heures, ce qui fait apparaître un précipité; ce dernier est filtré sous vide, puis lavé plusieurs fois à l'acétone chaude, ce qui laisse des cristaux jaunâtres. Par agitation de ces cristaux,

avec de l'acide chlorhydrique aqueux à 10%, on passe à l'acide diphosphonique di-ester de formule (I), recherché.

Le produit final, ainsi obtenu, est dans chaque cas, soumis à l'analyse par RMN et à l'infrarouge.

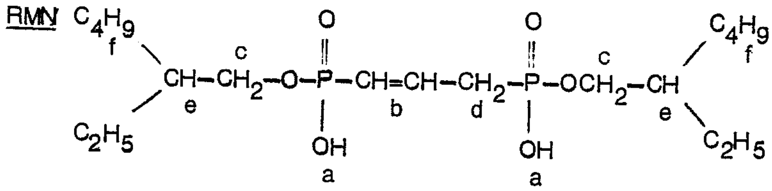

Ha = 1 pic étalé situé entre 7,4 et 8,0 ppm
Hb = 1 multiplet compris entre 5,5 et 6,5 ppm
Hc = 1 multiplet entre 3,3 et 4,0 ppm
Hd = 1 multiplet entre 2,4 et 3,0 ppm
He + Hf = 1 multiplet entre 0,8 et 1,6 ppm

IR
νC—H 2920 $cm^{-1}$
νC=C 1630 $cm^{-1}$
νP=O 1220 $cm^{-1}$
νP—O—H 1000 $cm^{-1}$

RMN

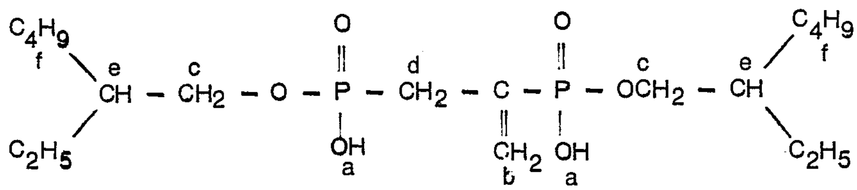

Ha = 1 pic mal résolu à 8,6 ppm
Hb = 1 multiplet entre 5,5 ppm et 6,5 ppm
Hc = 1 multiplet entre 3,1 ppm et 4,0 ppm
Hd = 1 multiplet entre 2,2 ppm et 2,9 ppm
He + Hf = 1 multiplet entre 0,7 ppm et 1,6 ppm

IR
ν C=C 1630
ν=O 1200 $cm^{-1}$
νP—O—C 1020 $cm^{-1}$
νC—H 2920 $cm^{-1}$
νP—OH 970 $cm^{-1}$Le rendement global est de 82%.

Exemples 10 à 17

Préparation de composés triphosphoniques

A une solution de 0,05 mole de phosphite sodé

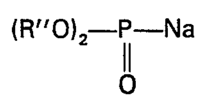

dans 50 ml de tétrahydrofurane (THF), on ajoute, goutte-à-goutte, 0,05 mole de diphosphonate

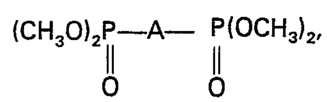

dont le groupe A présente une double liaison.

On agite sous une atmosphère inerte. La température du milieu est de 30° à 40°C pendant cette addition. La solution se colore en rouge-orange.

La réaction est complétée par chauffage à reflux durant 5 heures, après quoi on évapore la THF et l'on reprend par de 1'HCl dilué. Comme la filtration du précipité blanchâtre, formé, est assez difficile, on extrait le triphosphonate, ainsi obtenu, par du chloroforme. Ce mode opératoire est répété avec des phosphites de différents R'' et avec des diphosphonates tétraméthyliques de différents A. Les résultats de l'examen en RMN des produits obtenus sont donnés ci-après, pour chacun des exemples 10 à 17

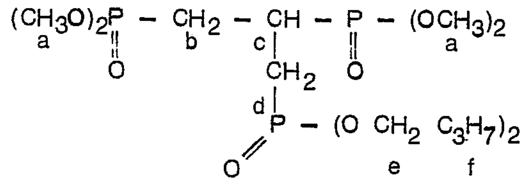

. . . (10)

Ha + He 3,6 → 4,2 ppm (multiplet)
Hc 2,0 → 2,7 ppm (multiplet)
Hb + Hd + Hf 0,8 → 1,8 ppm (multiplet)

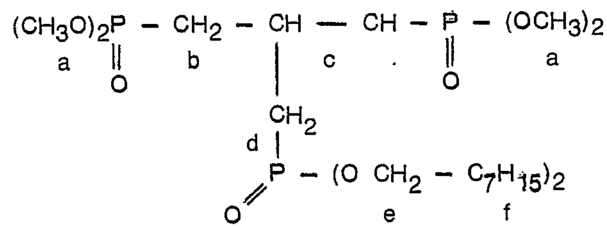

. . . (11)

Ha = He 3,5 → 4,2 ppm (multiplet)
Hc 1,9 → 2,4 ppm (multiplet)
Hd + Hb + Hf 0,9 → 1,8 ppm (multiplet)

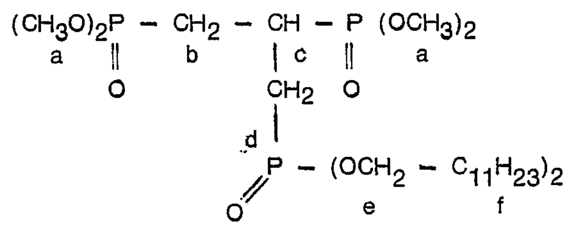

. . . (12)

Ha + He 3,5 → 4,2 ppm (multiplet)
Hc 1,9 → 2,5 ppm (multiplet)
Hb + Hd + Hf 0,6 → 1,9 ppm (multiplet)

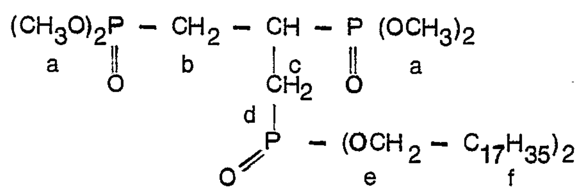

. . . (13)

Ha + He 3,7 → 4,4 ppm
Hc 2 → 2,4 ppm
Hb + Hd + Hf 0,9 → 2 ppm

. . . (14)

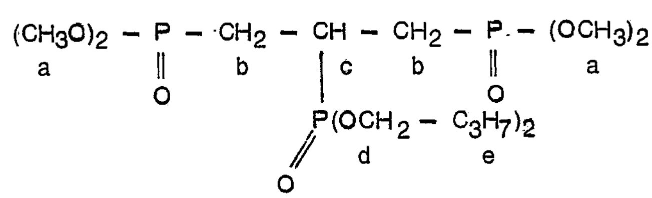

Ha + Hd 3,5 → 4,2 ppm (multiplet)
Hb + Hc + He 0,9 → 2,5 ppm (multiplet)

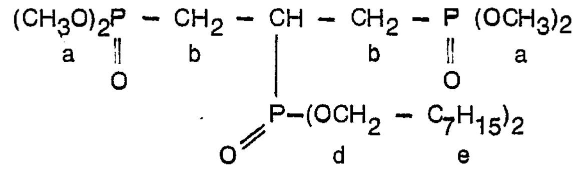

. . . (15)

Ha + Hb 3,7 → 4,2 ppm (multiplet)
Hb + Hc + Hc 0,9 → 2,4 ppm (multiplet)

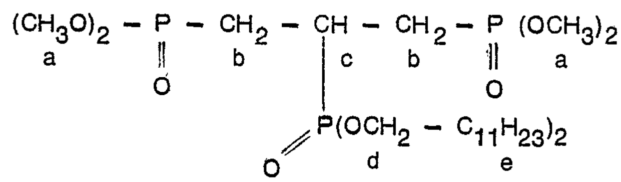

. . . (16)

Ha + Hd 0,9 → 1,6 ppm (multiplet)
Hb + Hc + He 3,6 → 4,0 ppm (multiplet)

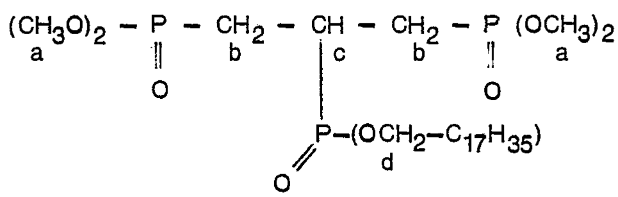

. . . (17)

Ha + Hd 3,5 → 4,2 ppm (multiplet)
Hb + Hc + He 0,7 → 1,8 ppm (multiplet)

Exemples 18 à 25

(Tableaux 1 et 2)

Préparation de sels sodiques triphosphoniques

Dans un ballon de 500 ml, on place 0,05 mole d'un des triphosphonates préparés dans les exemples précédents; on y ajoute 0,11 mole de NaI, soit un excès de 10%, et 200 ml d'acétone anhydre. Le mélange est chauffé pendant 4 à 5 heures, à reflux. L'abondant précipité, qui s'est formé, est séparé par filtration et lavé plusieurs fois à l'acétone chaude, ce qui laisse des cristaux jaune-citron.

Les tableaux 1 et 2 contiennent les points de fusion, les rendements par rapport au diphosphonate mis en oeuvre, ainsi que les raies caractéristiques du spectre infra-rouge, pour les 8 triphosphonates préparés.

Par hydrolyse acide, ménagée, à l'acide chlorhydrique des composés du tableau ci-après, on obtient les diacides tétraesters correspondants.

Un hydrolyse plus poussée conduit aux tétraacides diesters.

Parmi les applications des composés, faisant l'objet de la présente description, une place importante appartient à l'extraction, par liquides, de différents métaux, et en particulier de l'uranium. Les produits suivant l'invention apportent un progrès marqué à cette technique. Des résultats particulièrement bons sont obtenus lorsque A comprend 2 à 6 atomes de carbone et R 6 à 18, et mieux encore 8 à 14. Ces produits peuvent être utilisés pour ce genre d'extractions à la manière connue en soi, qu'il n'y a pas lieu de décrire ici.

Cependant, suivant un trait préféré de l'invention, l'extraction de métaux par des liquides organiques, en présence d'esters phosphoniques, est effectuée de façon nouvelle, perfectionnée. Un premier perfectionnement consiste à opérer en milieu phosphorique. Suivant un autre trait de l'invention, le milieu de l'extraction est porté à une température supérieure à l'ambiante, notamment au-dessus de 30°C, et de préférence entre 40° et 70°C. Voici, à titre d'indications non limitatives, les conditions opératoires selon l'invention.

Aux solutions phosphoriques, dont la composition est indiquée ci-après, on ajoute le ou les composés di- ou triphosphoniques dissous dans un diluant organique, tel que les fractions pétrolières parmi lesquelles on peut citer le kérosène, le dodécane et les produits vendus sous les noms SOLVESSO 200 et EXSOL D 100, ou dans des solvants plus polaires, notamment solvants chlorés, comme par exemple le chloroforme ou le trichloréthylène. La concentration du diester de l'acide diphosphonique selon l'invention est de préférence compris entre 1 à 10% en poids, soit d'environ 0,01 à 0,1 mole par litre.

Le procédé d'extraction, défini ci-dessus, s'applique particulièrement bien aux solutions phosphoriques dont la composition et le pH sont situés à l'intérieur des limites suivantes dans le cas de l'uranium.

| | Domaine usuel | Domaine préféré |
|---|---|---|
| $P_2O_5$ | de 10 à 45% | de 25 à 35% |
| Ca | de 0 à saturation | de 0 à 2 g/l |
| Fe total | de 2 à 30 g/l | de 5 à 20 g/l |
| U | de 10 mg/l à saturation | supérieur à 10 mg/l |
| $SO_4$— | de 0 à 40 g/l | de 5 à 30 g/l |
| $F^-$ | de 0 à 40 g/l | de 0 à 20 g/l |
| Actinides et métaux des terres rares | de 0 à la limite de solubilité | de 0 à 100 mg/l |
| pH | < | <1 |

Les exemples non limitatifs, qui suivent, ont pour but de mettre les spécialistes à même de déterminer les conditions opératoires qu'il convient d'utiliser dans chaque cas particulier.

Exemple 26

Extraction de l'uranium

Les essais ont été faits avec 1 volume de phase organique extractante pour 10 volumes de phase aqueuse. La phase extractante contenait 30 g de réactif, c'est-à-dire de diphosphonate, non purifié, par litre de diluant (en l'occurence du kérosène).

La phase aqueuse était constituée par un échantillon d'acide phosphorique brut, de composition moyenne ci-après:

| | |
|---|---|
| U: | 140 mg/l |
| Fe: | 8 g/l |
| $SO_4$: | 30 g/l |
| Ca: | 1 g/l |
| Al: | 3 g/l |
| F: | 14 g/l |
| $SiO_2$: | 8 g/l |
| $P_2O_5$: | 400 g/l |

L'uranium était, avant l'extraction, amené à la valence IV par réduction au moyen de 5 g de fer métallique par litre de liqueur à réduire.

Les extractions étaient effectuées en une seule étape, par agitation des deux phases pendant 10 minutes, à des températures de 30—45°C.

Le tableau ci-après récapitule les résultats obtenus avec différents diphosphonates de formule I, dont les R et A y sont indiqués (R'=H).

La teneur en $U^{IV}$ de la solution aqueuse initiale est de 140 mg/l. Celle de $Fe^{III}$ de 1900 mg/l pour les essais (1) à (3) et (5), et 800 mg/l pour (4).

Les symboles $C_U$ et $C_{Fe}$ désignent les concentrations finales, en mg/l, dans la solution aqueuse épuisée, tandis que $K_U$ et $K_{Fe}$ sont respectivement les teneurs en mg/1 de U et de Fe dans le kérosène après extraction.

Le rapport $K_U/C_U$ est le coefficient d'extraction

| | $C_U$ | $C_{Fe}$ | $K_U$ | $K_{Fe}$ | $K_U/C_U$ |
|---|---|---|---|---|---|
| (1) R: dodécyle<br>A: $-CH_2-C-$<br>‖<br>$CH_2$ | 22 | 1410 | 1180 | 495 | 53.6 |
| (2) R: octyle<br>A: $-CH_2-CH_2$ | 70 | — | 700 | 1200 | 10 |
| (3) R: dodécyle<br>A: $-CH_2-CH-$<br>\|<br>$CH_3$ | 70 | — | 700 | 1050 | 10 |
| (4) R: octyle<br>A: comme (3) | 78 | 200 | 620 | 605 | 7,95 |
| (5) R: octyle<br>A: comme (1) | 5 | — | 1400 | 150 | 280 |

On voit que l'extraction de 1'U se fait très bien, et tout particulièrement lorsque R est un octyle et A un allyle: en effet l'essai (5) conduit au coefficient d'extraction fort élevé de 280.

Exemple 27

Extraction de l'uranium

Le sel sodique du triphosphonate no 21 (Tableau 1) est essayé comme extractant d'une composé de l'$U^{IV}$ et du $Fe^{III}$ à partir d'une solution aqueuse, comparativement avec l'extractant connu, l'acide dioctyl-pyrophosphorique. Ce dernier, considéré dans l'art comme particulièrement efficace, répond à la formule

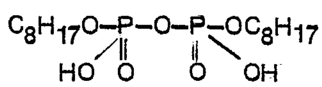

il est désigné par l'abréviation OPPA.

L'opération consiste à traiter, par une solution d'extractant dans du kérosène, une solution aqueuse d'acide phosphorique renfermant du nitrate d'uranyle préalablement réduit par du fer.

La solution aqueuse contient, par kg:

310 g de $P_2O_5$,
200 ppm d'uranium sous la forme de nitrate,
138 ppm de fer sous la forme de nitrate,

Quant au kérosène, il est additionné de 2,5% de chloroforme, et de 3% de composé extractant à essayer.

A 5 parties en poids de la solution aqueuse on ajoute 1 partie de solution kérosénique, et on agite les deux phases ensemble pendant 1 heure à 50°C. Après repos et décantation, U et Fe restants sont dosés dans la solution aqueuse; par différence avec les teneurs initiales susindiquées on connait les concentrations de ces métaux dans la phase kérosénique.

Dans le tableau suivant ces dernières sont exprimées par litre, compte tenu de la densité de 0,778 du kérosène et du rapport 1/5 des deux phases en présence.

| Concentrations en mg/l | OPPA | Triphosphonate n° 21 |
|---|---|---|
| $C_U$—uranium restant dans sol. aq. | 39 | 26,5 |
| $C_{Fe}$— fer restant dans sol. aq. | 38,5 | 38 |
| $K_U$ uranium dans la sol. kérosénique | 626 | 675 |
| $K_{Fe}$— uranium dans la sol. kérosénique | 386 | 387 |
| Coefficient d'extraction $K_U/C_U$ | 16 | 25 |
| Coefficient d'extraction $K_{Fe}/C_{Fe}$ | 10 | 10 |

On peut voir que le produit n° 23 suivant l'invention non seulement permet d'extraire davantage d'U, mais il est, en outre, plus sélectif vis-à-vis du fer: en effet, il fait extraire plus d'U par rapport au fer (coefficients 25/10) que ne le permet le pyrophosphate OPPA (coefficients 16/10).

## Exemple 28

Solubilité du diester diacide diphosphonique dans lequel

$$R = R_{12}H_{25} \text{ et } A = -CH_2-\underset{\underset{CH_2}{\|}}{C}-$$

Des essais de solubilité ont été réalisés dans l'Exsol D 100 contenant des quantités variables d'Octanol-2, de phosphate de tributyle et d'alcool amylique.

L'Exsol D 100 dissout de faibles quantités de produit: environ 0,05 mole par litre. Au-delà, la dissolution est lente et conduit à des émulsions qui peuvent difficilement être cassées.

Addition à 5% en volume des différents tiers solvants spécifiés ci-dessus: on peut dissoudre aisément jusqu'à 0,2 M du composé diphosphonique. Toutefois, pour les fortes valeurs, cette dissolution est lente et donne des émulsions qui ne sont cassées que lentement.

Des essais ont été avec des quantités pouvant aller jusqu'à 20% en volume des différents tiers solvants spécifiés ci-dessus et montrent qu'en augmentant la quantité de tiers solvant la dissolution est beaucoup plus aisée et que les émulsions ont tendance à disparaitre.

Des essais qualitatifs ont montré que jusqu'à 20% il est possible d'extraire de l'uranium dissous dans des solutions d'acide phosphorique à 30% bien que ledit tiers solvant ait tendance à diminuer le coefficient de partage en faveur de la solution organique.

## Exemple 29

Courbes de partage à différentes concentrations et à différentes températures

Les courbes de partage ont été réalisées par la mise en contact d'une solution du composé diphosphonique de l'exemple précédent dans de l'Exsol D 100 et avec des quantités variables d'Octanol-2.

Les trois premiers tableaux ont été réalisés à température ambiante (20°C environ). Le dernier tableau a été réalisé à 60°C environ, cette température étant atteinte par contact d'une solution d'acide phosphorique à 65°C avec la phase organique à température ambiante. Le température finale des deux phases, après agitation, était comprise entre 55° et 60°C.

Dans tous les essais, le rapport entre les volumes de phase organique et de phase aqueuse est de 1/10.

La phase aqueuse est constituée d'acide phosphorique pur à 30% de $P_2O_5$, dans laquelle on a dissous 15 grammes par litre de fer ferreux, sous forme de sel de Mohr, et des quantités variables de sulfate d'uranyle. Il est connu que, dans ces conditions, le fer ferreux réduit l'uranium VI à l'état d'oxydation IV

Octanol: 10%

| Concentration encomposé diphosphonique | (U) phase aqueuse finale (g/l) | (U) phase organique (g/l) | $K_d$ | Fer-phase organique (g/l) |
|---|---|---|---|---|
| 0,0516 | 0,016 | 0,82 | 53 | 0,58 |
| 0,0516 | 0,018 | 0,87 | 48 | 0,45 |
| 0,0516 | 0,065 | 1,95 | 30 | 0,24 |
| 0,0516 | 0,137 | 1,88 | 13,7 | 0,38 |
| 0,0516 | 0,317 | 2,83 | 8,9 | 0,11 |
| 0,0516 | 0,928 | 2,72 | 2,9 | 0,1 |

Octanol: 10%

| | | | | |
|---|---|---|---|---|
| 0,108 | 0,043 | 2,17 | 50 | 1,21 |
| 0,108 | 0,059 | 2,66 | 45,1 | 1,16 |
| 0,108 | 0,190 | 4,6 | 24,2 | 0,50 |
| 0,108 | 0,66 | 5,6 | 8,5 | 0,44 |

Octanol: 10%

| | | | | |
|---|---|---|---|---|
| 0,206 | 0,09 | 5,6 | 62 | 2,16 |
| 0,206 | 0,316 | 8,84 | 28 | 1,5 |

$$K_d = \frac{\text{(U) Phase organique}}{\text{(U) Phase aqueuse}}$$

Concentration en composé diphosphonique: 0,1 M—

Octanol: 4%

| Uranium phase aqueuse initiale (g/l) | (U) phase organique (g/l) | (U) phase aqueuse finale (g/l) | Fer-phase organique (g/l) | $K_d$ |
|---|---|---|---|---|
| 1,2 | 7,0 | 0,50 | 0,48 | 14 |
| | 6,6 | 0,54 | 0,46 | 12,2 |
| 0,9 | 6,18 | 0,282 | 0,54 | 21,9 |
| | 6,16 | 2,284 | 0,56 | 21,7 |
| 0,6 | 5,07 | 0,093 | 0,85 | 54,5 |
| 0,3 | 2,56 | 0,044 | 1,49 | 58,2 |
| 0,2 | 1,69 | 0,031 | 1,67 | 54,5 |
| | 1,53 | 0,047 | 1,83 | |
| 0,1 | 0,88 | 0,012 | 1,96 | 73 |
| | 0,77 | 0,023 | 2,25 | |

$$K_d = \frac{\text{(U) Phase organique}}{\text{(U) phase aqueuse}}$$

TABLEAU 1

| Formule | T F°C | Rdt | δ C–H aliphatique | δ(P=O) | δ(P–O–C) |
|---|---|---|---|---|---|
| (18) 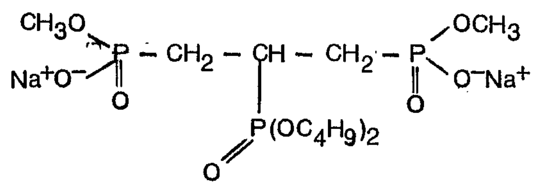 | liquide | | | | |
| (19) 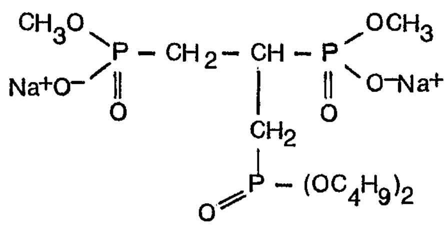 | liquide | | | | |
| (20) 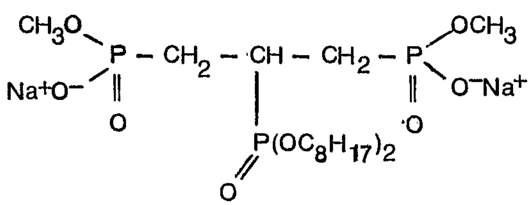 | >300°C | 48% | 2860 $cm^{-1}$ 2950 $cm^{-1}$ 1470 $cm^{-1}$ | 1220 $cm^{-1}$ | 1080 $cm^{-}$ |
| (21) 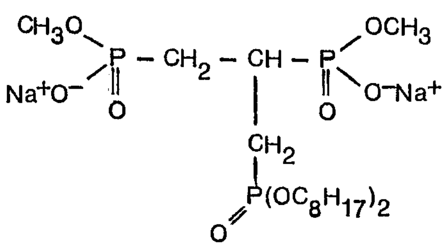 | >300°C | 57% | 2950 $cm^{-1}$ 1475 $cm^{-1}$ | 1200 $cm^{-1}$ | 1060 $cm^{-1}$ |

TABLEAU 2

| Formule | T F°C | Rdt | δ C–H aliphatique | δ(P=O) | δ(P–O–C) |
|---|---|---|---|---|---|
| (22) 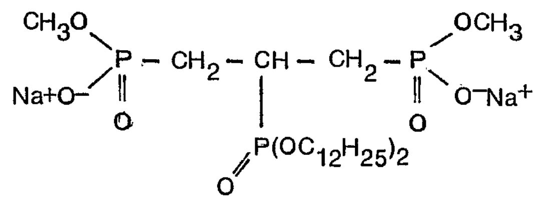 | 226°C dec | 53% | 2860 $cm^{-1}$<br>2940 $cm^{-1}$<br>1475 $cm^{-1}$ | 1220 $cm^{-1}$ | 1070 $cm^{-1}$ |
| (23) 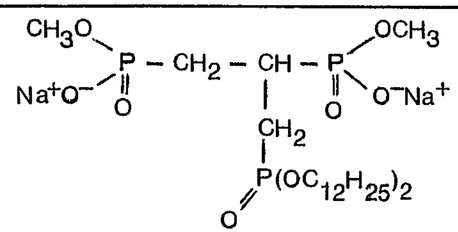 | 215°C dec | 71% | 2860 $cm^{-1}$<br>2925 $cm^{-1}$<br>1470 $cm^{-1}$ | 1210 $cm^{-1}$ | 1065 $cm^{-1}$ |
| (24) 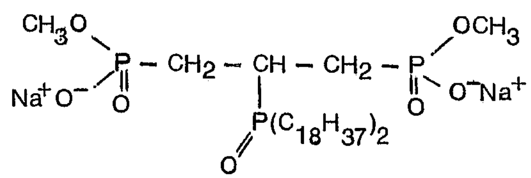 | 110°C | 50% | 2860 $cm^{-1}$<br>2925 $cm^{-1}$<br>1475 $cm^{-1}$<br>725 $cm^{-1}$ | 1210 $cm^{-1}$ | 1070 $cm^{-1}$ |
| (25) 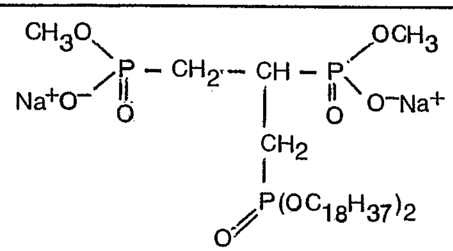 | 208°C dec | 58% | 2860 $cm^{-1}$<br>2930 $cm^{-1}$<br>1475 $cm^{-1}$<br>725 $cm^{-1}$ | 1200 $cm^{-1}$ | 1060 $cm^{-1}$ |

**Revendications**

1. Ester phosphonique, dans lequel deux atomes de phosphore sont reliés par un groupe organique, au moyen d'une liaison directe phosphore-carbone, répondant à la formule

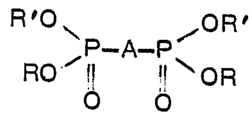

(I)

dans laquelle A est un groupe alphatique dont un des atomes de carbone peut être lié à l'atome de phosphore d'un groupement

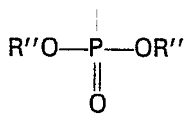

(II)

les symboles R et R'', semblables ou différents, désignant des alkyles en $C_1$ à $C_{20}$, caractérisé en ce que les R' sont des atomes d'hydrogène ou de métal alcalin, ou bien des cations d'ammonium quaternaire, le groupe aliphatique A ayant 3 à 6 atomes de carbone.

2. Ester suivant la revendication 1, caractérisé en ce que A est $—CH_2—CH=CH—$, $—CH_2—CH=CH—CH_2—$ ou $—CH_2—C=CH_2$.

3. Ester suivant la revendication 1, caractérisé en ce que A est

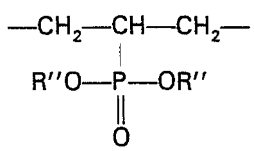

ou

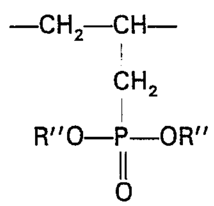

4. Ester suivant la revendication 2, caractérisé en ce que les R sont des alkyles en $C_6$ à $C_{18}$.

5. Ester suivant la revendications 3, caractérisé en ce que les R sont des méthyles, R'' étant en $C_4$ à $C_{18}$.

6. Procédé de préparation d'un diester diphosphonique suivant la revendication 1, caractérisé en ce qu'il comprend trois étapes: 1°— traitement d'un diphosphonate tétraméthylique, renfermant le même groupe A, par une amine dont la constante de dissociation ionique est comprise entre $10^{-6}$ et $10^{-3}$ à 25°C, dans un solvant anhydre, entre 50° et 100°C, de façon à produire un di-sel d'ammonium quaternaire du diméthyl-ester diphosphonique; 2°—réaction de ce disel avec un halogénure d'alkyle R au sein d'un solvant polaire, aprotique, inerte, pour substituer R aux cations d'ammonium quaternaire, et hydrolyse des deux $—OCH_3$ restants en vue de la substitution de H ou d'un cation alcalin aux $CH_3$ correspondants.

7. Procédé de préparation d'un tétre-ester triphosphonique suivant la revendication 1, caractérisé en ce qu'un dérivé de métal alcalin d'un phosphite diester de type

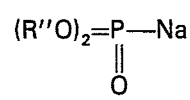

est mis à réagir avec un diester diphosphonique dont le groupe A comporte une double liaison, au sein d'un solvant inerte, à reflux de celui-ci, puis élimination du solvant et traitement du produit restant par une solution d'acide diluée.

8. Application d'un ester di- ou tri-phosphonique à l'extraction d'un métal à partir d'une solution aqueuse, contenant un sel de ce métal, au moyen d'un diluant organique, caractérisé en ce que cet ester présente la composition suivant une des revendications 1 à 5.

9. Application suivant la revendication 8 à l'extraction de l'uranium, du nickel ou/et du fer.

**Patentansprüche**

1. Phosphonester, in dem zwei Phosphoratome durch eine organische Gruppe mittels einer direkten Phosphor-Kohlenstoffbindung verbunden sind, entsprechend der Formel

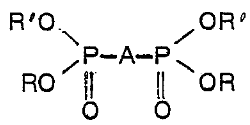

(I)

worin A eine aliphatische Gruppe ist, von der eines der Kohlenstoffatome an das Phosphoratom einer Gruppe

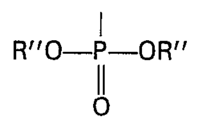

(II)

gebunden sein kann, worin die Symbole R und R'' die gleich oder verschieden sein können, Alkyle mit $C_1$ bis $C_{20}$ bedeuten dadurch gekennzeichnet, dass die Symbole R' Wasserstoff- oder Alkalimetallatome oder auch quaternäre Ammoniumkationen sind und die aliphatische Gruppe A 3 bis 6 Kohlenstoffatome aufweise.

2. Ester nach Anspruch 1, dadurch gekennzeichnet, dass A $—CH_2—CH{=}CH—$, $—CH_2—CH{=}CH—CH_2—$ oder $—CH_2—C{=}CH_2$ ist.

3. Ester nach Anspruch 1, dadurch gekennzeichnet, dass A

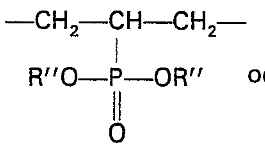

oder

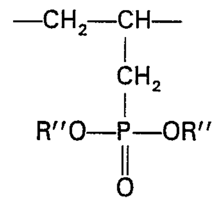

ist.

4. Ester nach Anspruch 2, dadurch gekennzeichnet, dass die Symbole R Alkyle mit $C_6$ bis $C_{18}$ sind.

5. Ester nach Anspruch 3, dadurch gekennzeichnet, dass die Symbole R Methylgruppen sind und R'' $C_4$ bis $C_{18}$ ist.

6. Verfahren zur Herstellung eines Diphosphondiesters nach Anspruch 1, dadurch gekennzeichnet, dass es drei Stufen umfasst: 1) Behandeln eines Tetramethyldiphosphonats, das die gleiche Gruppe A enthält, mit einem Amin, dessen Ionendissoziationskonstante zwischen $10^{-6}$ und $10^{-3}$ bei 25°C liegt, in einem wasserfreien Lösungsmittel zwischen 50 und 100°C, um ein quaternäres Ammonium-Disalz des Diphosphondimethylesters zu bilden; 2) Reaktion dieses Disalzes mit einem R-Alkyl-halogenid in einem polaren aprotischen inerten Lösungsmittel, um die quaternären Ammoniumkationen durch R zu ersetzen und Hydrolyse der beiden verbleibenden $—OCH_3$, um die entsprechenden $CH_3$ durch H oder ein Alkalikation zu ersetzen.

7. Verfahren zur Herstellung eines Triphosphon-Tetraesters nach Anspruch 1, dadurch gekennzeichnet, dass ein Alkalimetallderivat eines Phosphitdiesters des Typs

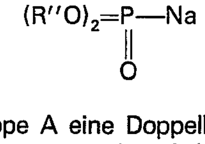

mit einem Diphosphondiester, dessen Gruppe A eine Doppelbindung aufweist, in einem inerten Lösungsmittel unter dessen Rückfluss zur Reaktion gebracht wird, anschliessend das Lösungsmittel entfernt wird und das verbleibende Produkt mit einer Lösung einer verdünnten Säure behandelt wird.

8. Verwendung eines Di- oder Triphosphonesters zur Extraktion eines Metals aus einer wässrigen Lösung, die ein Salz dieses Metalls enthält, mit einem organischen Verdünnungsmittel, dadurch gekennzeichnet, dass dieser Ester die Zusammensetzung gemäss einem der Ansprüche 1 bis 5 aufweist.

9. Verwendung nach Anspruch 8 zur Extraktion von Uran, Nickel und/oder Eisen.

**Claims**

1. Phosphonic ester in which two phosphorus atoms are connected to an organic group by means of a direct phosphorus-carbon bond, according to the formula

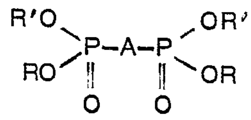

(I)

in which A is an aliphatic group, one of the carbon atoms of which can be connected to a phosphorus atom of a group

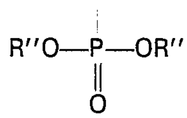

(II)

wherein R and R″ are the same or different and represent $C_1$ to $C_{20}$ alkyl groups, characterized in that the R′ groups are hydrogen atoms or alkali metal atoms or quaternary ammonium cations, the aliphatic group A having 3 to 6 carbon atoms.

2. Ester according to claim 1, characterized in that A is $—CH_2—CH{=}CH—$, $—CH_2—CH{=}CH—CH_2—$ or $—CH_2—C{=}CH_2$.

3. Ester according to claim 1, characterized in that A is

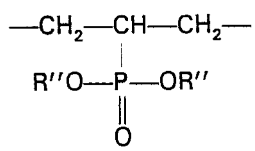

or

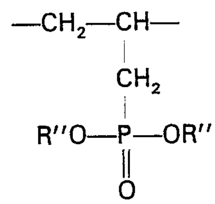

4. Ester according to claim 2, characterized in that the R groups are $C_6$ to $C_{18}$ alkyl groups.

5. Ester according to claim 3, characterised in that the R groups are methyl groups, R″ being $C_4$ to $C_{18}$.

6. Process of preparation of a diphosphonic diester according to claim 1, characterized in that it comprises three stages: 1—treatment of a tetramethyl diphosphonate containing the same group A with an amine having an ionic dissociation constant between $10^{-6}$ and $10^{-3}$ at 25°C in an anhydrous solvent between 50° and 100°C, so as to produce a quaternary ammonium di-salt of the diphosphonic dimethyl ester; 2—reaction of this di-salt with an R alkyl halide in a polar aprotic inert solvent, in order to substitute R for the quaternary ammonium cations and 3—hydrolysis of the two $—OCH_3$ residues for substitution of H or an alkali metal cation for the corresponding $CH_3$ groups.

7. Process of preparation of a triphosphonic tetra-ester according to claim 1, characterised in that an alkali metal derivative of a phosphite diester of the type

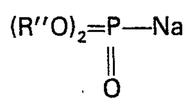

is reacted with a diphosphonic diester in which the group A comprises a double bond, in an inert solvent under reflux, followed by elimination of the solvent and treatment of the remaining product with a dilute acid solution.

8. Application of a di- or tri-phosphonic ester to the extraction of a metal from an aqueous solution containing a salt of the metal by means of an organic diluent, characterized in that the ester has the composition according to any of claims 1 to 5.

9. Application according to claim 8 to the extraction of uranium, nickel and/or iron.